# EUROPEAN PATENT APPLICATION

(11) **EP 2 755 110 A2**
(43) Date of publication of application: **16.07.2014**
(21) Application number: 14150526.3
(22) Date of filing: 09.01.2014
(51) Int. Cl.: G06F 1/32

(54) **Dynamic power consumption real-time display device**

(30) Priority: 09.01.2013 CN 201320010922 U; 21.10.2013 CN 201310495743
(71) Applicant: Beijing BOE Display Technology Co., Ltd., Beijing 100176 (CN); Boe Technology Group Co. Ltd., Beijing 100015 (CN)
(72) Inventor: Chen, Min, 100176 Beijing (CN); He, Jianmin, 100176 Beijing (CN); Guo, Naijia, 100176 Beijing (CN); Xu, Wanli, 100176 Beijing (CN)
(74) Representative: Brötz, Helmut

(57) **Abstract**

The embodiments of the present disclosure disclose a dynamic power consumption real-time display device, which includes: a first power consumption determining module, according to a current PWM value of a backlight of an LCD panel as well as a corresponding relationship between PWM values of the backlight and the power consumption of the liquid crystal equipment in a mute state, for determining the power consumption of the liquid crystal equipment in the mute state corresponding to the current PWM value of the backlight, and a dynamic power consumption display module for displaying the power consumption of the liquid crystal equipment in the mute state corresponding to the current PWM value of the backlight in real time. The technical solution provided by the embodiments of the present disclosure can enhance the convenience for determining dynamic power consumption of the liquid crystal equipment and reduce the system cost.

## Description

### TECHNICAL FIELD

The present disclosure relates to the field of liquid crystal display technology, and more specifically, to a dynamic power consumption real-time display device based on liquid crystal equipment.

### BACKGROUND

At present, a real-time display of dynamic power consumption of the liquid crystal equipment in the art is generally implemented as follows: a power consumption measuring instrument is connected to AC input terminals of the liquid crystal equipment, so as to monitor dynamic power consumption values of the liquid crystal equipment at various moments by using the power consumption measuring instrument, and the monitored dynamic power consumption values of the liquid crystal equipment are displayed to users in real time.

However, a power consumption measuring instrument which is large in size and relatively high in cost needs to be connected to external terminals of the liquid crystal equipment when the real-time display of dynamic power consumption of the liquid crystal equipment is implemented in the above mode, so that in general the above mode is only suitable for measuring power consumption of the liquid crystal equipment in a laboratory and is not applicable to common home users; that is, the above mode does not have a good operability; in addition, if the power consumption measuring instrument which is large in size and relatively high in cost is connected to the external terminals of the liquid crystal equipment, the appearance of the liquid crystal equipment is also affected and the cost for measuring the power consumption of the liquid crystal equipment is increased.

### SUMMARY

The embodiments of the present disclosure provide a dynamic power consumption real-time display device, in order to solve the problem in the prior art that it is not easy to operate and relatively high in cost when the dynamic power consumption of a liquid crystal equipment is measured using a power consumption measuring instrument.

Accordingly, a dynamic power consumption real-time display device is provided by the embodiments of the present disclosure, wherein the device includes:

A first power consumption determining module, according to a current Pulse Width Modulation (PWM) value of a backlight of a liquid crystal display (LCD) panel as well as a pre-established corresponding relationship between PWM values of a backlight and power consumption of the liquid crystal equipment in a mute state, for determining the power consumption of the liquid crystal equipment in the mute state corresponding to the current PWM value of the backlight;

A dynamic power consumption display module, for displaying the power consumption of the liquid crystal equipment in the mute state corresponding to the current PWM value of the backlight in real time.

Further, the device further includes:

A first relationship establishing module, according to the power consumption of the liquid crystal equipment in the mute state corresponding to respective PWM values of the backlight which is measured by a power consumption measuring instrument, for pre-establishing a corresponding relationship between the PWM values of the backlight and the power consumption of the liquid crystal equipment in the mute state.

Further, the device further includes a second power consumption determining module, wherein

the second power consumption determining module, according to a current volume value of the liquid crystal equipment as well as a pre-established corresponding relationship between volume values and power consumption of a loudspeaker of the liquid crystal equipment, for determining the power consumption of the loudspeaker of the liquid crystal equipment corresponding to the current volume value of the liquid crystal equipment.

Further, the dynamic power consumption display module includes a dynamic power consumption determining sub-module for adding the power consumption of the liquid crystal equipment in the mute state corresponding to the current PWM value of the backlight and the power consumption of the loudspeaker of the liquid crystal equipment corresponding to the current volume value together, to obtain current total dynamic power consumption of the liquid crystal equipment.

Further, the dynamic power consumption display module further includes a dynamic power consumption display sub-module, for displaying the current total dynamic power consumption of the liquid crystal equipment obtained by the dynamic power consumption determining sub-module in real time.

Optionally, the dynamic power consumption display module displays the power consumption of the loudspeaker of the liquid crystal equipment corresponding to the current volume value in real time.

Further, the device further includes:

A second relationship establishing module, for subtracting the power consumption of the liquid crystal equipment corresponding to zero volume value under a given PWM value of the backlight from the power consumption of the liquid crystal equipment corresponding to respective volume values under the given PWM value of the backlight measured by the power consumption measuring instrument, to obtain the power consumption differences of the liquid crystal equipment corresponding to the respective volume values, and for pre-establishing a corresponding relationship between volume values and the power consumption differences of the liquid crystal equipment according to the power consumption differences of the liquid crystal equipment corresponding to the respective volume values, and, for taking the established corresponding relationship between the volume values and the power consumption differences of the liquid crystal equipment as the corresponding relationship between the volume values and the power consumption of the loudspeaker of the liquid crystal equipment.

Further, the device further includes:

A PWM value acquisition module for acquiring a current PWM value of the backlight of the LCD panel by reading a current value of a PWM register in a systematic chip of the liquid crystal equipment.

Further, the PWM value of the backlight is within the range of [0, 2^{N}-1], where N is a positive integer and is equal to the digits of the PWM register.

Further, the power consumption of the liquid crystal equipment in the mute state includes:

the power consumption of a main board of the liquid crystal equipment in the mute state, the power consumption of a timing controller (TCON) board of the LCD panel in the mute state, and the power consumption of the backlight of the LCD panel in the mute state.

The present disclosure brings about advantageous effects as follows:

The dynamic power consumption real-time display device provided by the embodiments of the present disclosure can acquire the power consumption of the liquid crystal equipment in the mute state corresponding to the current PWM value of the backlight by inquiring a preset corresponding relationship between PWM values of the backlight and the power consumption of the liquid crystal equipment in the mute state according to the current PWM value of the backlight of the liquid crystal equipment, and can display the acquired power consumption of the liquid crystal equipment corresponding to the current PWM value of the backlight in the mute state in real time, thus improving operability of acquiring dynamic power consumption of the liquid crystal equipment, reducing hardware cost of system and enhancing user experience.

### BRIEF DESCRIPTION OF THE DRAWINGS

FIG. 1 is a schematic diagram of a structure of a dynamic power consumption real-time display device provided by a first embodiment of the present disclosure;
FIG. 2 is a schematic diagram of a structure of a dynamic power consumption real-time display device provided by a second embodiment of the present disclosure.

### DETAILED DESCRIPTION

The embodiments of the present disclosure shall be further described in detail hereinafter in conjunction with the accompanying drawings, but the present invention shall be not limited to the embodiments as follows:

### First Embodiment

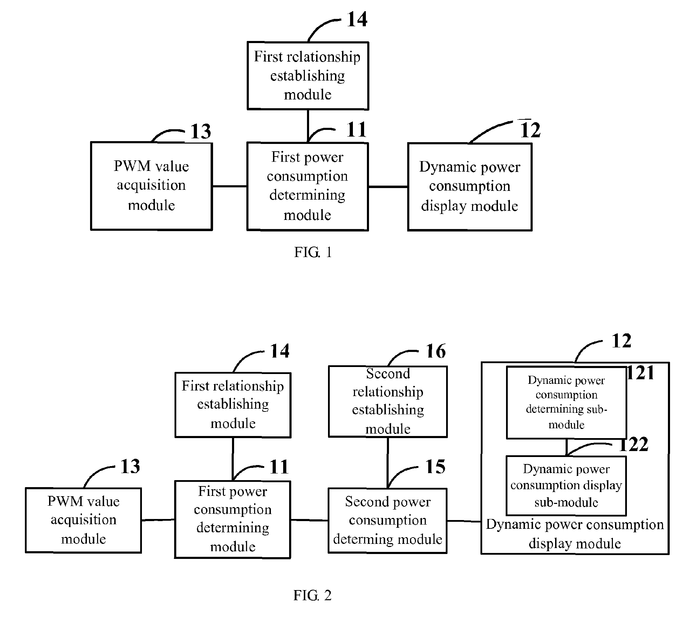

As shown in FIG. 1, a schematic diagram of a structure of a dynamic power consumption real-time display device provided by the first embodiment of the present disclosure is depicted. The dynamic power consumption real-time display device is applicable to any liquid crystal equipment (such as a LCD TV, tablet PC and the like) having a liquid crystal display module, and the embodiment of the present disclosure does not limit hereto. Specifically, the dynamic power consumption real-time display device includes a first power consumption determining module 11 and a dynamic power consumption display module 12, wherein:

The first power consumption determining module 11, according to a current PWM value of a backlight of an LCD panel as well as a pre-established corresponding relationship between PWM values of the backlight and power consumption of the liquid crystal equipment in a mute state, determines the power consumption of the liquid crystal equipment in the mute state corresponding to the current PWM value of the backlight;

The dynamic power consumption display module 12 displays the power consumption of the liquid crystal equipment in the mute state to which the current PWM value of the backlight corresponds in real-time, which is determined by the first power consumption determining module 11; specifically, the dynamic power consumption display module 12 can realize a real-time display of the power consumption of the liquid crystal equipment in the mute state corresponding to the current PWM value of the backlight on a display panel of the liquid crystal equipment in an On-Screen-Display (OSD) mode, so that users can directly learn about the current dynamic power consumption of the liquid crystal equipment, thereby enhancing user experience in use.

In one example, the power consumption of the liquid crystal equipment in the mute state (volume value is 0) includes power consumption of a main board of the liquid crystal equipment in the mute state, power consumption of a TCON board of a LCD panel in the mute state, and power consumption of the backlight of the LCD panel in the mute state.

Further, the dynamic power consumption real-time display device further includes a PWM value acquisition module 13:

The PWM value acquisition module 13 acquires a current PWM value of the backlight of the LCD panel by reading a current value of a PWM register in a systematic chip in the liquid crystal equipment.

Optionally, the PWM value of the backlight is within the range of [0, 2^{N}-1], where N is a positive integer which is equal to digits of the PWM register; specifically, the digits of the PWM register can be designed according to actual situation of the systematic chip of the liquid crystal equipment, and the embodiment of the present disclosure is not intended to limit hereto; further, in the embodiment of the present disclosure, the value of N can be 8, which is to say, the PWM value of the backlight varies within the range of [0, 255].

Further, the dynamic power consumption real-time display device further includes a first relationship establishing module 14, wherein:

The first relationship establishing module 14, according to the power consumption of the liquid crystal equipment in the mute state which is measured by a power consumption measuring instrument and corresponds to respective PWM values of the backlight, pre-establishes a corresponding relationship between the PWM values of the backlight and the power consumption of the liquid crystal equipment in the mute state.

Further, taking a case in which the PWM value of the backlight varies within the range of [0, 255] as an example, the process of establishing the corresponding relationship between the PWM values of the backlight and the power consumption of the liquid crystal equipment in the mute state can be:

Setting volume value of the liquid crystal equipment to zero (mute state), sequentially regulating the PWM value of the backlight of the LCD panel from 0 to 255, measuring current power consumption of the liquid crystal equipment under each PWM value of the backlight by using a power consumption measuring instrument, so as to obtain the power consumption of the liquid crystal equipment in the mute state corresponding to respective PWM values of the backlight (256 in total), and establishing the corresponding relationship between the PWM value of the backlight and the power consumption of the liquid crystal equipment in the mute state according to the power consumption of the liquid crystal equipment in the mute state corresponding to respective PWM values of the backlight.

It should be noted that, after a corresponding relationship between the PWM values of the backlight and the power consumption of the liquid crystal equipment in the mute state is obtained, the corresponding relationship between the PWM values of the backlight and the power consumption of the liquid crystal equipment in the mute state can be stored; further, the corresponding relationship between the PWM values of the backlight and the power consumption of the liquid crystal equipment in the mute state can be stored in a form of an index table, and the embodiment of the present disclosure is not intended to limit hereto.

The first embodiment of the present disclosure provides a dynamic power consumption real-time display device. The device includes: a first power consumption determining module, according to a current PWM value of the backlight of an LCD panel as well as a pre-established corresponding relationship between PWM values of the backlight and the power consumption of the liquid crystal equipment in a mute state, for determining the power consumption of the liquid crystal equipment in the mute state corresponding to the current PWM value of the backlight; and a dynamic power consumption display module, for displaying the power consumption of the liquid crystal equipment in the mute state corresponding to the current PWM value of the backlight in real time. By using the technical solution provided by the first embodiment of the present disclosure, dynamic power consumption of the liquid crystal equipment can be acquired by inquiring a preset corresponding relationship between PWM values of the backlight and the power consumption of the liquid crystal equipment in the mute state on the basis of the current PWM value of the backlight of the liquid crystal equipment, and the acquired dynamic power consumption can be displayed in real time, thus improving operability of determination of the dynamic power consumption of the liquid crystal equipment, reducing hardware cost of system and enhancing user experience.

### Second Embodiment

Generally, dynamic power consumption of liquid crystal equipment mainly comprises four parts: the power consumption of the main board of the liquid crystal equipment, the power consumption of the TCON board of the LCD panel, the power consumption of the backlight of LCD panel, and the power consumption of the loudspeaker of the liquid crystal equipment; and when the liquid crystal equipment is in a normal operation state, both the power consumption of the main board of the liquid crystal equipment and the power consumption of the TCON board of the LCD panel vary slightly, while the power consumption of the backlight of the LCD panel changes with a current PWM value of the backlight of the LCD panel and the power consumption of the loudspeaker of the liquid crystal equipment varies with a current volume value of the liquid crystal equipment, which is to say, the current total dynamic power consumption of the liquid crystal equipment can be calculated by acquiring the power consumption of the liquid crystal equipment in the mute state corresponding to the current PWM value of the backlight(including the power consumption of the main board of the liquid crystal equipment in the mute state, the power consumption of the TCON board of the LCD panel in the mute state and the power consumption of the backlight of the LCD panel in the mute state) as well as the power consumption of the loudspeaker of the liquid crystal equipment corresponding to the current volume value.

Based on the above concept, the second embodiment of the present disclosure provides a dynamic power consumption real-time display device on the basis of the first embodiment. As shown in Fig. 2, a schematic diagram of a structure of the dynamic power consumption real-time display device provided by the second embodiment of the present disclosure is depicted. The dynamic power consumption real-time display device is applicable to any liquid crystal equipment (such as a LCD TV, a tablet PC and the like) provided with a liquid crystal display module, and the embodiment of the present disclosure doest not limit hereto. Specifically, the dynamic power consumption real-time display device includes a first power consumption determining module 11 and a dynamic power consumption display module 12, and further includes a second power consumption determining module 15, wherein:

The first power consumption determining module 11, according to a current PWM value of the backlight of an LCD panel as well as a pre-established corresponding relationship between PWM values of the backlight and the power consumption of the liquid crystal equipment in a mute state, determines the power consumption of the liquid crystal equipment in the mute state corresponding to the current PWM value of the backlight, wherein the power consumption of the liquid crystal equipment in the mute state (volume value is 0) includes the power consumption of the main board of the liquid crystal equipment in the mute state, power consumption of the TCON board of the LCD panel in the mute state, and power consumption of the backlight of the LCD panel in the mute state;

The second power consumption determining module 15 is used for determining power consumption of the loudspeaker of the liquid crystal equipment corresponding to a current volume value of liquid crystal equipment according to the current volume value of the liquid crystal equipment as well as a pre-established corresponding relationship between volume values and power consumption of the loudspeaker of the liquid crystal equipment;

The dynamic power consumption display module 12 is used for adding the power consumption of the liquid crystal equipment in the mute state corresponding to the current PWM value of the backlight and the power consumption of the loudspeaker of the liquid crystal equipment corresponding to the current volume value together, to obtain current total dynamic power consumption of the liquid crystal equipment, and for implementing a real-time display of the total dynamic power consumption. It should be noted that the dynamic power consumption display module 12 can be further used for displaying in real time the power consumption of the liquid crystal equipment in the mute state corresponding to the current PWM value of the backlight, and alternatively for displaying in real time the power consumption of the loudspeaker of the liquid crystal equipment corresponding to the current volume value, and the embodiment of the present disclosure is not intended to limit hereto.

Specifically, the dynamic power consumption display module 12 can display in real time the current total dynamic power consumption of the liquid crystal equipment, the power consumption of the liquid crystal equipment in the mute state corresponding to the current PWM value of the backlight, or the power consumption of the loudspeaker of the liquid crystal equipment corresponding to the current volume value on the display panel of the liquid crystal equipment in an OSD way, so that users can directly learn about the current dynamic power consumption of the liquid crystal equipment, hereby improving user experience.

Specifically, in the second embodiment of the present disclosure, the dynamic power consumption display module 12 can include a dynamic power consumption determining sub-module 121;

The dynamic power consumption determining sub-module 121 is used for adding the power consumption of the liquid crystal equipment in the mute state corresponding to the current PWM value of the backlight and the power consumption of the loudspeaker of the liquid crystal equipment corresponding to the current volume value together, to obtain the current total dynamic power consumption of the liquid crystal equipment.

Optionally, the dynamic power consumption display module 12 further includes a dynamic power consumption display sub-module 122; the dynamic power consumption display sub-module 122 is used for displaying in real time the current total dynamic power consumption of the liquid crystal equipment obtained by the dynamic power consumption determining sub-module 121. It should be noted that the dynamic power consumption display sub-module 122 can be further used for displaying in real time the power consumption of the liquid crystal equipment in the mute state corresponding to the current PWM value of the backlight, or for displaying in real time the power consumption of the loudspeaker of the liquid crystal equipment corresponding to the current volume value, and the embodiment of the present disclosure is not intended to limit hereto.

Further, the dynamic power consumption real-time display device further includes a PWM value acquisition module 13:

The PWM value acquisition module 13 is used for acquiring a current PWM value of the backlight of the LCD panel by reading a current value of a PWM register in a systematic chip of the liquid crystal equipment.

In an example, the PWM value of the backlight is within the range of [0, 2^{N}-1], where N is a positive integer which is equal to the digits of the PWM register; specifically, the digits of the PWM register can be designed according to actual situation of the systematic chip of the liquid crystal equipment, and the embodiment of the present disclosure is not intended to limit hereto; further, in the embodiment of the present disclosure, the value of N can be 8, which is to say, the PWM value of the backlight varies within the range of [0, 255].

Further, the dynamic power consumption real-time display device can further include a first relationship establishing module 14 and a second relationship establishing module 16, wherein:

The first relationship establishing module 14, according to the power consumption of the liquid crystal equipment in the mute state which is measured by the power consumption measuring instrument and corresponds to respective PWM values of the backlight, is used for pre-establishing a corresponding relationship between the PWM values of the backlight and the power consumption of the liquid crystal equipment in the mute state;

The second relationship establishing module 16 is used for subtracting the power consumption of the liquid crystal equipment which is measured by the power consumption measuring instrument and corresponds to zero volume value (volume value is zero, namely, in the mute state) under a given PWM value of the backlight from the power consumption of the liquid crystal equipment which is measured by the power consumption measuring instrument and corresponds to respective volume values under the given PWM value of the backlight respectively, to obtain the power consumption differences of the liquid crystal equipment corresponding to the respective volume values, and used for pre-establishing a corresponding relationship between volume values and the power consumption differences of the liquid crystal equipment, according to the power consumption differences of the liquid crystal equipment corresponding to the respective volume values, and, used for taking the established corresponding relationship between the volume values and the power consumption differences of the liquid crystal equipment as a corresponding relationship between the volume values and the power consumption of the loudspeaker of the liquid crystal equipment.

In an example, the volume value can vary within the range of [0, M], where M is a positive integer and is related to the maximum volume value preset in liquid crystal equipment, and the present disclosure is not intended to limit hereto; specifically, in the embodiment of the present disclosure, M can be 100 if the maximum volume value preset in the liquid crystal equipment is 100.

Further, taking a case in which the PWM value of the backlight varies within the range of [0, 255] as an example, the process of establishing the corresponding relationship between the PWM values of the backlight and the power consumption of the liquid crystal equipment in the mute state can be:

Setting the volume value of the liquid crystal equipment to zero (mute state), sequentially regulating the PWM value of the backlight of the LCD panel from 0 to 255, measuring current power consumption of the liquid crystal equipment under each PWM value of the backlight by using a power consumption measuring instrument, so as to obtain the power consumption of the liquid crystal equipment in the mute state corresponding to respective PWM values of the backlight (256 in total), and establishing the corresponding relationship between the PWM values of the backlight and the power consumption of the liquid crystal equipment in the mute state, according to the obtained power consumption of the liquid crystal equipment in the mute state corresponding to respective PWM values of the backlight.

It should be noted that, after a corresponding relationship between the PWM values of the backlight and the power consumption of the liquid crystal equipment in the mute state is obtained, the corresponding relationship between the PWM values of the backlight and the power consumption of the liquid crystal equipment in the mute state can be stored; and the corresponding relationship between the PWM values of the backlight and the power consumption of the liquid crystal equipment in the mute state can be stored in a form of an index table, and the embodiment of the present disclosure is not intended to limit hereto.

Further, taking a case in which the PWM value of the backlight varies within the range of [0, 255] and the volume value varies within the range of [0, 100] as example, the process of establishing the corresponding relationship between the volume values and the power consumption of the loudspeaker of the liquid crystal equipment can be:

Setting the PWM value of the backlight of LCD panel as 255 (or any other value from 0 to 255, and the embodiment of the present disclosure is not intended to limit hereto), sequentially regulating the volume value of the liquid crystal equipment from 0 to 100 (101 in total), and measuring current power consumption of the liquid crystal equipment under each volume value by using the power consumption measuring instrument, to obtain the power consumption of the liquid crystal equipment corresponding to respective volume values when the PWM value of the backlight is 255; subtracting the power consumption of the liquid crystal equipment corresponding to zero volume value (volume value is zero) when the PWM value of the backlight is 255 from the obtained power consumption of the liquid crystal equipment corresponding to the respective volume values when the PWM value of the backlight is 255, to obtain the power consumption differences of the liquid crystal equipment (101 in total) corresponding to the respective volume values, pre-establishing a corresponding relationship between the volume values and the power consumption differences of the liquid crystal equipment according to the obtained power consumption differences of the liquid crystal equipment corresponding to the respective volume values, and taking the established corresponding relationship between the volume values and the power consumption differences of the liquid crystal equipment as a corresponding relationship between the volume values and the power consumption of the loudspeaker of the liquid crystal equipment.

It should be noted that, after a corresponding relationship between the volume values and the power consumption of the loudspeaker of the liquid crystal equipment is obtained, the corresponding relationship between the volume values and the power consumption of the loudspeaker of the liquid crystal equipment can be stored; and the corresponding relationship between the volume values and the power consumption of the loudspeaker of the liquid crystal equipment can also be stored in a form of an index table, and the embodiment of the present disclosure is not intended to limit hereto.

The second embodiment of the present disclosure provides a dynamic power consumption real-time display device, wherein the dynamic power consumption real-time display device can acquire the power consumption of the liquid crystal equipment in the mute state corresponding to the current PWM value of the backlight and the power consumption of the loudspeaker of the liquid crystal equipment corresponding to the current volume value by respectively inquiring a preset corresponding relationship between PWM values of the backlight and the power consumption of the liquid crystal equipment in the mute state as well as a preset corresponding relationship between the volume values and the power consumption of the loudspeaker of the liquid crystal equipment, according to the current PWM value of the backlight and the current volume value of the liquid crystal equipment, and add the acquired power consumption of liquid crystal equipment in the mute state corresponding to the current PWM value of the backlight and the power consumption of the loudspeaker of the liquid crystal equipment corresponding to the current volume value together, so as to obtain current total dynamic power consumption of the liquid crystal equipment, and display the acquired total dynamic power consumption in real time, thus improving operability of acquiring dynamic power consumption of the liquid crystal equipment, reducing hardware cost of system and enhancing user experience.

Obviously, those of skill in the art can implement various modifications and variations to the embodiments of the present disclosure without departing from the spirit and principle of the present disclosure. Thereby, the present disclosure is intended to include these modifications and variations if such modifications and variations to the embodiments of the present disclosure are within the scope of the claims of the present disclosure and equivalents thereof.

## Claims

1. A dynamic power consumption real-time display device, **characterized in that** the device comprises:
a first power consumption determining module, according to a current Pulse Width Modulation (PWM) value of a backlight of a liquid crystal display (LCD) panel as well as a pre-established corresponding relationship between PWM values of the backlight and power consumption of the liquid crystal equipment in a mute state, for determining the power consumption of the liquid crystal equipment in the mute state corresponding to the current PWM value of the backlight; and
a dynamic power consumption display module, for displaying the power consumption of the liquid crystal equipment in the mute state corresponding to the current PWM value of the backlight in real time.

2. The dynamic power consumption real-time display device according to claim 1, wherein, the device further comprises:
a first relationship establishing module, according to the power consumption of the liquid crystal equipment in the mute state corresponding to respective PWM values of the backlight which is measured by a power consumption measuring instrument, for pre-establishing the corresponding relationship between the PWM values of the backlight and the power consumption of the liquid crystal equipment in the mute state.

3. The dynamic power consumption real-time display device according to claim 1 or 2, wherein, the device further comprises:
a second power consumption determining module, according to a current volume value of the liquid crystal equipment as well as a pre-established corresponding relationship between volume values and power consumption of a loudspeaker of the liquid crystal equipment, for determining the power consumption of the loudspeaker of the liquid crystal equipment corresponding to the current volume value of the liquid crystal equipment.

4. The dynamic power consumption real-time display device according to claim 3, wherein, the dynamic power consumption display module comprises:
a dynamic power consumption determining sub-module, for adding the power consumption of the liquid crystal equipment in the mute state corresponding to the current PWM value of the backlight and the power consumption of the loudspeaker of the liquid crystal equipment corresponding to the current volume value together, to obtain current total dynamic power consumption of the liquid crystal equipment.

5. The dynamic power consumption real-time display device according to claim 4, wherein, the dynamic power consumption display module further comprises:
a dynamic power consumption display sub-module, for displaying the current total dynamic power consumption of the liquid crystal equipment obtained by the dynamic power consumption determining sub-module.

6. The dynamic power consumption real-time display device according to claim 3, wherein, the dynamic power consumption display module displays the power consumption of the loudspeaker of the liquid crystal equipment corresponding to the current volume value in real time.

7. The dynamic power consumption real-time display device according to any one of claims 3 to 6, wherein, the device further comprises:
a second relationship establishing module, for subtracting the power consumption of the liquid crystal equipment corresponding to zero volume value under a given PWM value of the backlight from the power consumption of the liquid crystal equipment corresponding to respective volume values under the given PWM value of the backlight measured by the power consumption measuring instrument, to obtain the power consumption differences of the liquid crystal equipment corresponding to the respective volume values, and for pre-establishing a corresponding relationship between volume values and power consumption differences of the liquid crystal equipment according to the obtained power consumption differences of the liquid crystal equipment corresponding to the respective volume values, and for taking the established corresponding relationship between the volume values and the power consumption differences of the liquid crystal equipment as the corresponding relationship between the volume values and the power consumption of the loudspeaker of the liquid crystal equipment.

8. The dynamic power consumption real-time display device according to any one of claims 1 to 7, wherein, the device further comprises:
a PWM value acquisition module, for acquiring the current PWM value of the backlight of the LCD panel by reading a current value of a PWM register in a systematic chip of the liquid crystal equipment.

9. The dynamic power consumption real-time display device according to claim 8, wherein,
the PWM value of the backlight is within the range of [0, 2^{N}-1], where N is a positive integer and is equal to the digits of the PWM register.

10. The dynamic power consumption real-time display device according to any one of claims 1 to 9, wherein, the power consumption of the liquid crystal equipment in the mute state comprises:
power consumption of a main board of the liquid crystal equipment in the mute state, power consumption of a timing controller board of the LCD panel in the mute state, and power consumption of the backlight of the LCD panel in the mute state.
